(19) **Europäisches Patentamt / European Patent Office / Office européen des brevets**

(11) **EP 1 406 375 B1**

(12) **EUROPEAN PATENT SPECIFICATION**

(45) Date of publication and mention
of the grant of the patent:
**13.02.2013 Bulletin 2013/07**

(51) Int Cl.:
*H02P 6/08* *(2006.01)* *H02P 6/18* *(2006.01)*

(21) Application number: **03021519.8**

(22) Date of filing: **24.09.2003**

(54) **Electric motor driver and drive control system thereof**

Elektrischer Motorantrieb und zugehöriges Antriebsregelsystem

Entraîneur électrique d'un moteur et système de régulation d'entraîneur associée

(84) Designated Contracting States:
**ES IT SE**

(30) Priority: **01.10.2002 JP 2002288588**

(43) Date of publication of application:
**07.04.2004 Bulletin 2004/15**

(73) Proprietor: **Panasonic Corporation**
**Kadoma-shi**
**Osaka 571-8501 (JP)**

(72) Inventors:
• **Noma, Hirofumi**
**Otsu-shi, Shiga 520-0232 (JP)**
• **Matsui, Keizo**
**Otsu-shi, Shiga 520-2101 (JP)**
• **Matsushiro, Hideo**
**Kusatsu-shi**
**Shiga 525-0072 (JP)**
• **Goto, Eiji**
**Otsu-shi**
**Shiga 520-0867 (JP)**

• **Arakawa, Masashi**
**Kusatsu-shi**
**Shiga 525-0058 (JP)**
• **Takeuchi, Yuzuru**
**Kusatsu-shi**
**Shiga 525-0037 (JP)**

(74) Representative: **Eisenführ, Speiser & Partner**
**Postfach 10 60 78**
**28060 Bremen (DE)**

(56) References cited:
**US-A- 5 420 492    US-A- 5 457 375**
**US-A- 5 920 175**

• **PATENT ABSTRACTS OF JAPAN vol. 2003, no. 11, 5 November 2003 (2003-11-05) -& JP 2003 189670 A (MATSUSHITA ELECTRIC IND CO LTD), 4 July 2003 (2003-07-04)**
• **PATENT ABSTRACTS OF JAPAN vol. 016, no. 074 (E-1170), 24 February 1992 (1992-02-24) -& JP 03 265485 A (MATSUSHITA ELECTRIC IND CO LTD), 26 November 1991 (1991-11-26)**

**Description**

BACKGROUND OF THE INVENTION

FIELD OF THE INVENTION

The present invention relates to an electric motor driver and a drive control system for controlling a drive of an electric motor such as a brushless DC motor at any rotation number.

DESCRIPTION OF THE PRIOR ART

Prior art document US 5 457 375 discloses a sensorless commutation controller for a polyphase dynamo electric machine (electric motor), wherein the electric motor is supplied with a bus current. Based on the bus current a PWM inverter commutates the motor by supplying in a predetermined manner a corresponding current to the windings of the motor. The operation of the motor is monitored and control of a commutation angle is performed based on an analysis of the waveshape of the bus current having characteristics that are a function of a commutation angle of the motor. Specifically, a control variable is processed which is a function of the commutation angle, and the control includes further information of the waveshape of the bus current (ripples or transients). The variable is combined with further sampled data according to a prescribed formula, and also the motor's impulse response is considered.

Prior art document US 5 920 175 A discloses an instantaneous position indicating apparatus for a sensorless switched reluctance machine system, wherein an instantaneous position generation circuit develops a signal for controlling the commutation of the switched reluctance machine. The instantaneous position generation circuit includes a digitally controlled counter which is incremented as a function of estimated rotor velocity of the switched reluctance machine. An output of the digitally controlled counter is fed back to modify the counter increment to ensure that the output of the counter tracks the estimated rotor position accurately. In combination with an accumulator for receiving data words the counter is able to properly control the commutation circuitry even under high speed conditions.

Recently, in constructing a motor driver for driving an electric motor such as a compressor for use in an air-conditioning system, it becomes increasingly necessary to reduce a power consumption in view of global environmental protection. As a power-saving technology in a motor driver, an inverter is widely used for driving a high efficient electric motor such as a brushless DC motor at any rotation number.

Furthermore, as a motor driving technology, a sinusoidal-wave driving technology using a sinusoidal waveform current is remarked because of having a high efficiency and a low noise, in place of a rectangular-wave driving technology using a rectangular-waveform current.

In the case where an electric motor such as a compressor is used in an air-conditioning system, since it is difficult to mount a sensor for detecting a rotation position of a rotor of the electric motor, there has been employed a position-sensorless type of a sinusoidal-wave driving technology which drives the electric motor by estimating a rotation position of the rotor by a method without using a rotation position sensor. In addition, as a method of estimating a rotation position of a rotor, there is used a known method of estimating an induced voltage of an electric motor. (See, for example, Patent Document 1: Japanese Patent Laid-Open Publication No. 2000-350489)

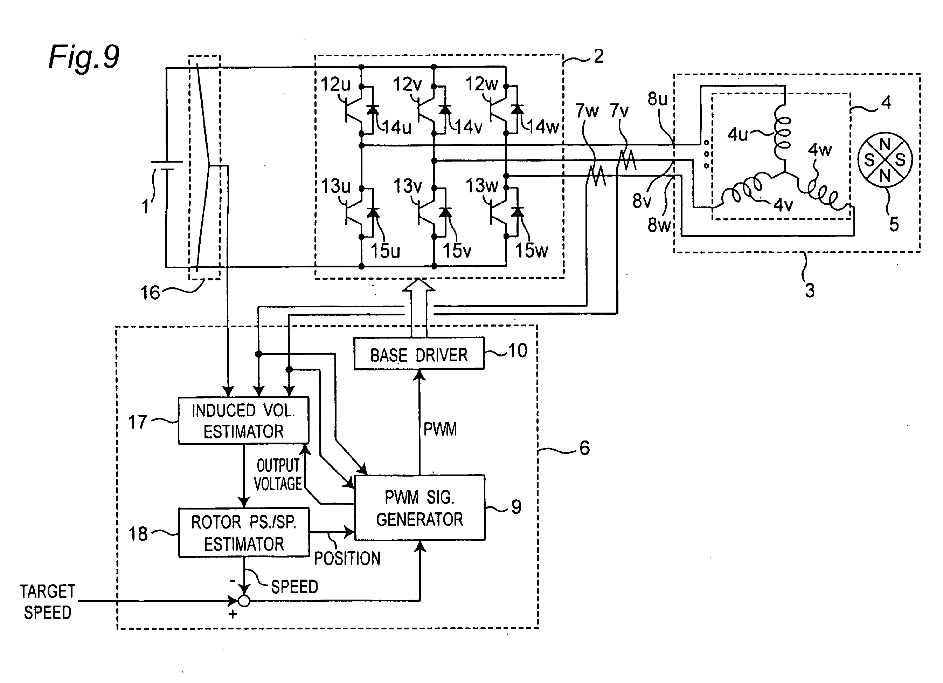

Fig. 9 illustrates a system construction which implements a position-sensorless type of a sinusoidal wave driving technology. In Fig. 9, reference numeral 1 designates a DC power supply, 2 designates an inverter, 3 designates a brushless motor, 4 designates a stator, 5 designates a rotor, 6 designates a controller, and reference numerals 7v and 7w designate current sensors. In this construction, the brushless motor 3 comprises the stator 4 and rotor 5, where the stator 4 has three phase windings 4u, 4v and 4w which are Y-connected at a neutral point as their centering point, and the rotor 5 has a magnet mounted thereon. A U-phase terminal 8u, a V-phase terminal 8v and a W-phase terminal 8w are connected to a non-connection end of the U-phase winding 4u, a non-connection end of the V-phase winding 4v and a non-connection end of the W-phase winding 4w, respectively.

The inverter 2 has three series circuits for a U phase, a V phase and a W phase, which are connected in parallel. Each of the series circuits includes a pair of switching elements connected in series on the upper and lower streams of a current. A DC voltage output from the DC power supply 1 is applied to the three series circuits. The series circuit for the U phase has a switching element 12u on the upstream side and a switching element 13u on the downstream side. The series circuit for the V phase has a switching element 12v on the upstream side and a switching element 13v on the downstream side. The series circuit for the W phase has a switching element 12w on the upstream side and a switching element 13w on the downstream side.

Furthermore, freewheel diodes 14u, 14v, 14w, 15u, 15v and 15w are connected in parallel to the switching elements 12u, 12v, 12w, 13u, 13v and 13w, respectively. The terminals 8u, 8v and 8w of the brushless motor 3 are respectively connected to an interconnection point between the switching elements 12u and 13u, an interconnection point between the switching elements 12v and 13v, and an interconnection point between the switching elements 12w and 13w of the inverter 2.

The currents flowing through the phase windings 4v and 4w in the brushless motor 3 are detected by the current sensors 7v and 7w and the detected current values are supplied to the controller 6. The controller 6 estimates an induced voltage based on the supplied current values and outputs a control signal for controlling the drive of the inverter 2. Thus, the control in driving the brushless motor 3 is performed in the above circuit constitution.

As described above, in the conventional position-sensorless type of a sinusoidal wave driving technology implemented by estimating the induced voltage, at least two current detectors such as current sensors must be used to detect phase currents of an electric motor to be driven, which increases a cost in constituting a motor driver.

## SUMMARY OF THE INVENTION

The present invention is made to solve the above problem and it is an essential object of the present invention to provide an electric motor driver and a drive control system which can detect a phase current with high precision in an inexpensive constitution and excellently drive an electric motor in a low-speed rotation region to a high-speed rotation region, having a high speed stability in the low-speed region.

In order to achieve the object mentioned above, a first aspect of the present invention provides an electric motor driver for driving a three-phase electric motor under controlling a drive based on each phase current flowing through each phase winding of the three-phase electric motor as defined in claim 1.

Further preferred embodiments of the present invention are defined in the dependent claims.

## BRIEF DESCRIPTION OF THE DRAWINGS

These and other objects and features of the present invention will be readily understood from the following detailed description taken in conjunction with preferred embodiments thereof with reference to the accompanying drawings, in which like parts are designated by like reference numerals and in which:

Fig. 1 is a block diagram showing a system construction of an electric motor driver according to an embodiment 1 of the present invention;
Fig. 2 illustrates an example of time-related variations of phase current conditions of an electric motor;
Fig. 3 illustrates an example of variations of a PWM signal;
Fig. 4 illustrates current conditions flowing in the electric motor and an inverter when the PWM signal is varied as shown in Fig. 3;
Fig. 5 illustrates an example of variations of the PWM signal;
Fig. 6 illustrates current conditions flowing in the electric motor and an inverter when the PWM signal is varied as shown in Fig.5;
Fig. 7 illustrates an example of variations of the PWM signal;
Fig. 8 illustrates set values of a speed proportional gain KP by a speed PI calculating means; and
Fig. 9 is a block diagram showing a conventional example.

## DETAILED DESCRIPTION OF THE PREFERRED EMBODIMENT

Hereinafter, a preferred embodiment of the present invention is described with reference to the accompanying drawings.

(Embodiment 1)

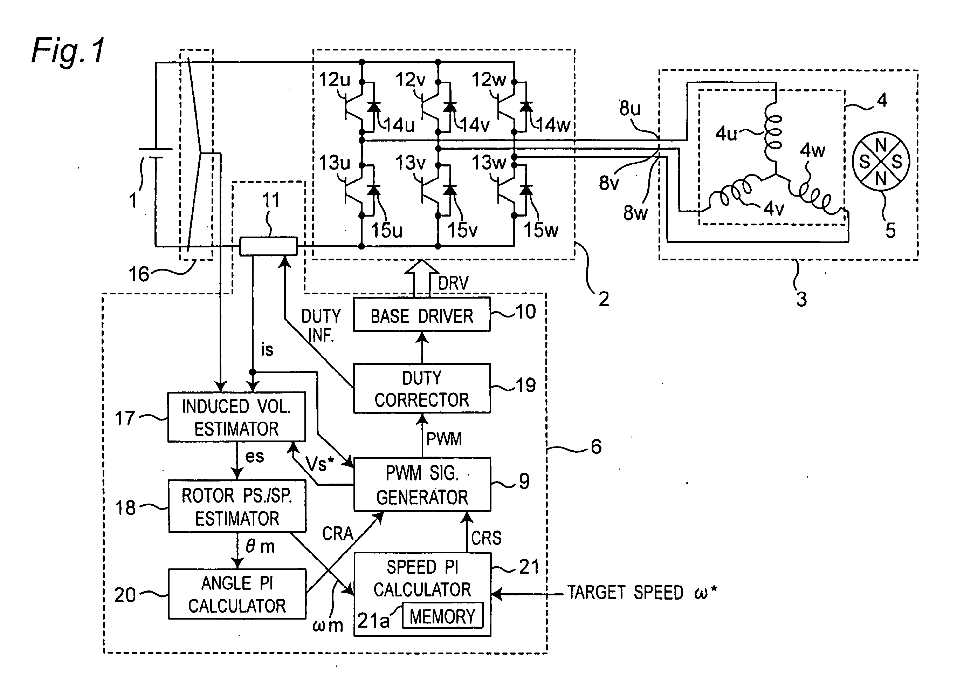

Fig. 1 shows a system construction implementing an embodiment 1 of the present invention which is a combination of an electric motor driver and an electric motor. In Fig. 1, reference numeral 1 designates a DC power supply, 2 designates an inverter, 3 designates a brushless motor, 4 designates a stator, 5 designates a rotor, and reference numeral 6 designates a controller. The brushless motor 3 comprises the stator 4 and the rotor 5, where the stator 4 has three phase windings 4u, 4v and 4w which are Y-connected at a neutral point as their centering point, and the rotor 5 includes a magnet mounted thereon and the magnet has magnetic poles N and S. A U-phase terminal 8u is connected to a non-connection end of the U-phase winding 4u, that is, to the side opposite to the neutral point. Similarly, a V-phase terminal 8v and a W-phase terminal 8w are connected to the non-connection end of the V-phase winding 4v and the non-connection end of the W-phase winding 4w, respectively.

The inverter 2 has three series circuits connected in parallel for the U phase, the V phase and the W phase, each of which includes a pair of switching elements connected in series on the upper and the lower streams of a current. A DC voltage output from the DC power supply 1 is applied to these series circuits of the inverter 2 through a voltage detector 16 which detects a voltage value applied to the inverter. The series circuit for the U phase includes a switching element 12u on the upstream side and a switching element 13u on the downstream side.

Similarly, the series circuit for the V phase includes a switching element 12v on the upstream side and a switching element 13v on the downstream side. In addition, the series circuit for the W phase includes a switching element 12w on the upstream side and a switching element 13w on the downstream side. Furthermore, freewheel diodes 14u, 14v, 14w, 15u, 15v and 15w are connected in parallel to the switching elements 12u, 12v, 12w, 13u, 13v and 13w, respectively.

The terminals 8u, 8v and 8w of the brushless motor 3 are connected to an interconnection point between the switching elements 12u and 13u, an interconnection point between the switching elements 12v and 13v, and an interconnection point between the switching elements 12w and 13w of the inverter 2, respectively.

The DC voltage applied from the DC power supply 1 to the inverter 2 is converted to a three-phase AC voltage by the series circuits comprised of the switching elements in the inverter 2 to thereby drive the brushless motor 3. In order to implement a target speed applied from the outside, a correction value is calculated based on a difference between the target speed and a present speed, and in order for the inverter to output a calculated voltage to be applied to the brushless motor, a PWM signal is generated in the controller 6 for controlling the drive of the switching elements in the inverter 2.

The controller 6 includes a PWM signal generating portion 9 for generating a PWM signal (PWM) to drive-control the switching elements of the inverter 2, and a duty correcting portion 19 for correcting the PWM signal which is converted to a drive signal (DRV) by a base driver 10 for electrically driving the switching elements. Then, the drive signal is applied from the base driver 10 to the inverter 2 to drive the switching elements 12u, 12v, 12w, 13u, 13v and 13w.

Further, the controller includes a current detector 11, which is provided on an inverter busbar, for detecting an inverter busbar current to determine a phase current (iu, iv, iw rpresented by "is") of the brushless motor 3, and an induced voltage estimating portion 17 for estimating an induced voltage (eu, ev, ew represented by "es") of the brushless motor 3.

Furthermore, the controller 6 includes a rotor position/speed estimating portion 18 for estimating a rotation position in angle $\theta$m of a polar and a rotation speed $\omega$m of the rotor of the brushless motor 3, an angle PI calculating portion 20 for calculating a correction value (CRA) by performing a proportional-plus-integral calculation based on information of the polar position in angle of the rotor, and a speed PI calculating portion 21 for calculating a correction value (CRS) by performing a proportional-plus-integral calculation based on the estimated speed of the rotor.

Next, an operation of the controller 6 is described in brief below. An induced voltage es=(eu, ev, ew) of the brushless motor 3 is estimated by the induced voltage estimating portion 17 based on the information of the phase current "is"=(iu, iv, iw) of the brushless motor 3 detected by the current detector 11 on the inverter busbar, an output voltage Vs* calculated by the PWM signal generating portion 9, and an inverter applied voltage detected by the voltage detector 16.

Furthermore, a polar position in angle $\theta$m and a rotation speed $\omega$m of the rotor of the brushless motor 3 are estimated by the rotor position/speed estimating portion 18. The PWM signal for controlling the drive of the brushless motor 3 is generated by the PWM signal generating portion 9 based on correction values (CRA, CRS). The first correction value CRA is obtained through a proportional-plus-integral calculation performed by the angle PI calculating portion 20 based on the information $\theta$ m of the polar position in angle of the rotor. The second correction value CRS is obtained through the proportional-plus-integral calculation performed by the speed PI calculating portion 21 based on the estimated rotation speed $\omega$m with reference to a target speed $\omega$*. Thus, the rotor speed is controlled so as to become the target speed by information such as deviation of the estimated speed $\omega$ m of the rotor 5 from the target speed w * applied from the outside.

Then, an operation of the induced voltage estimating portion 17 is described. The current detector 11 determines the phase currents iu, iv and iw (represented by "is") flowing through the phase windings by detecting the inverter busbar current, and the detected phase current values are supplied to the induced voltage estimating portion 17. In addition, the output voltage Vs* calculated by the PWM signal generating portion 9 and a voltage applied to the inverter which was detected by the voltage detector 16 are supplied to the induced voltage estimating portion 17. Thus, the phase voltages (vu, vv and vw) applied to the phase windings are calculated by the induced voltage estimating portion 17 based on the above supplied information.

In theory, the induced voltage values eu, ev and ew (represented by es) induced in the phase windings are calculated from the above values of the phase currents (iu, iv, iw) and the phase voltages (vu, vv, vw) by the following equations (1), (2) and (3). In the following equations, R is resistance and L is inductance, and d(iu)/dt, d(iv)/dt and d(iw) /dt are time differentiations of the phase currents iu, iv and iw, respectively.

$$eu = vu - R \cdot iu - L \cdot d(iu)/dt \quad \dots \quad (1)$$

$$ev = vv - R \cdot iv - L \cdot d(iv)/dt \quad \ldots \quad (2)$$

$$ew = vw - R \cdot iw - L \cdot d(iw)/dt \quad \ldots \quad (3)$$

When the equations (1), (2) and (3) are developed in detail, the following equations (4), (5) and (6) are obtained.

$$eu = vu$$

$$- R \cdot iu$$

$$- (la + La) \cdot d(iu)/dt$$

$$- Las \cdot cos (2\theta m) \cdot d(iu)/dt$$

$$- Las \cdot iu \cdot d\{cos (2\theta m)\}/dt$$

$$+ 0.5 \cdot La \cdot d(iv)/dt$$

$$- Las \cdot cos(2\theta m - 120°) \cdot d(iv)/dt$$

$$- Las \cdot iv \cdot d\{cos (2\theta m - 120°)\}/dt$$

$$+ 0.5 \cdot La \cdot d(iw)/dt$$

$$- Las \cdot cos(2\theta m - 120°) \cdot d(iw)/dt$$

$$- Las \cdot iw \cdot d \{cos(2\theta m + 120°)\}/dt \quad \ldots \quad (4)$$

$$ev = vv$$

$$- R \cdot iv$$

$$- (la + La) \cdot d(iv)/dt$$

$$- Las \cdot cos(2\theta m + 120°) \cdot d(iv)/dt$$

$$- Las \cdot iv \cdot d\{cos(2\theta m + 120°)\}/dt$$

$$+ 0.5 \cdot La \cdot d(iw)/dt$$

$$- Las \cdot cos(2\theta m) \cdot d(iw)/dt$$

$$- Las \cdot iw \cdot d\{cos(2\theta m)\}/dt$$

$$+ 0.5 \cdot La \cdot d(iu)/dt$$

$$- Las \cdot cos(2\theta m - 120°) \cdot d(iu)/dt$$

$$- Las \cdot iu \cdot d\{cos(2\theta m - 120°)\}/dt \quad … \quad (5)$$

$$ew = vw$$

$$- R \cdot iw$$

$$- (la + La) \cdot d(iw)/dt$$

$$- Las \cdot cos(2\theta m - 120°) \cdot d(iw)/dt$$

$$- Las \cdot iw \cdot d\{cos(2\theta m - 120°)\}/dt$$

$$+ 0.5 \cdot La \cdot d(iu)/dt$$

$$- Las \cdot cos(2\theta m + 120°) \cdot d(iu) / dt$$

$$- Las \cdot iu \cdot d\{cos(2\theta m + 120°)\}/dt$$

$$+ 0.5 \cdot La \cdot d(iv)/dt$$

$$- Las \cdot cos(2\theta m) \cdot d(iv)/dt$$

$$- Las \cdot iv \cdot d\{cos(2\theta m)\}/dt \quad … \quad (6)$$

Here, d/dt designates a time differentiation and an electrical angular speed converted from an estimated speed $\omega m$ is used as $d\theta/dt$ appearing in the differential calculation referring to a trigonometric function. Furthermore, d(iu)/dt, d(iv)/dt, and d(iw)/dt are obtained by a first-order Euler approximation. In addition, the w-phase current value iw, the u-phase current value iu and the v-phase current value iv have a relation represented in an equation (14) to be mentioned later. Here, R designates a resistance per a phase of the winding, la designates a leakage inductance per a phase of the winding, La designates an average value of an effective inductance per a phase of the winding and Las designates an amplitude of the effective inductance per a phase of the winding.

In the operation of the induced voltage estimating portion 17, the following equations (7), (8) and (9) which simplifies the equations (4), (5) and (6) are used. According to the simplification, it is assumed that the phase current values iu, iv and iw are sinusoidal waves and the phase currents iu, iv and iw are obtained from a current command amplitude ia and a current command phase $\beta T$ and simplified.

$$
\begin{aligned}
eu = vu \\
+ R \cdot ia \cdot \sin(\theta m + \beta T) \\
+ 1.5 \cdot (la + La) \cdot \cos(\theta m + \beta T) \\
- 1.5 \cdot Las \cdot \cos(\theta m - \beta T) \qquad \dots \quad (7)
\end{aligned}
$$

$$
\begin{aligned}
ev = vv \\
+ R \cdot ia \cdot \sin(\theta m + \beta T - 120°) \\
+ 1.5 \cdot (la + La) \cdot \cos(\theta m + \beta T - 120°) \\
- 1.5 \cdot Las \cdot \cos(\theta m - \beta T - 120°) \qquad \dots \quad (8)
\end{aligned}
$$

$$
\begin{aligned}
ew = vw \\
+ R \cdot ia \cdot \sin(\theta m + \beta T - 240°) \\
+ 1.5 \cdot (la + La) \cdot \cos(\theta m + \beta T - 240°) \\
- 1.5 \cdot Las \cdot \cos(\theta m - \beta T - 240°) \qquad \dots \quad (9)
\end{aligned}
$$

Next, an operation of the rotor position/speed estimating portion 18 is described below. The position in angle $\theta m$ and the rotation speed $\omega m$ of the rotor 5 are estimated using the estimated induced voltage values es=(eu, ev and ew) estimated by the induced voltage estimating portion 17. In specific, an angle $\theta m$ estimated by the rotor position/ speed estimating portion 18 is corrected using an error of the induced voltage to converge on a true value, whereby the estimated speed $\omega m$ is obtained.

First, induced voltage reference values (eum, evm and ewm) of the phases are obtained by the following equations.

$$
eum = em \cdot \sin(\theta m + \beta T)
$$

$$
evm = em \cdot \sin(\theta m + \beta T - 120°)
$$

$$
ewm = em \cdot \sin(\theta m + \beta T - 240°) \qquad \cdots \quad (10)
$$

Here, an induced voltage amplitude value em is obtained by corresponding to the amplitude values of the estimated induced voltages eu, ev and ew. Then, a deviation $\varepsilon$ between the obtained induced voltage reference values (esm) and the induced voltage estimated values (es) is calculated.

As shown in the following equation (11), the deviation $\varepsilon$ is obtained by subtracting the induced voltage reference value esm from the induced voltage estimated value es.

$$\varepsilon = es - esm \qquad\qquad \cdots (11)$$

(here, s represents the phases u, v and w)

The estimated angle $\theta m$ becomes the true value when the deviation becomes zero. Therefore, the estimated angle $\theta m$ is subject to the proportional-plus-integral calculation performed by the angle PI calculating portion 20 in such a manner that the deviation $\varepsilon$ becomes zero and the resultant correction value (CRA) is transmitted from the angle PI calculating portion 20 to the PWM signal generating portion 9. In addition, the estimated speed $\omega m$ is obtained by calculating a variation value of the estimated angle $\theta m$ in the rotor position/speed estimating portion 18 and the estimated speed $\omega m$ is transmitted to the speed PI calculating portion 21.

In the speed PI calculating portion 21, in order to implement a target speed $\omega^*$, using a difference $\Delta w$ between the target speed $\omega^*$ and the estimated speed $\omega m$, the correction value (CRS) is obtained by Equation (12).

$$KP\Delta\omega + KI\Delta\omega \qquad\qquad \cdots (12)$$

(KP : proportional gain, KI : integral gain)

The obtained correction value (CRS) is transmitted from the speed PI calculating portion 21 to the PWM signal generating portion 9. In the PWM signal generating portion 9, a voltage $V^*$ to be output is calculated based on the correction values (CRA, CRS) from the angle PI calculating portion 20 and the speed PI calculating portion 21. Then a voltage $Vs^*$ to be applied to each phase (here s representing phases u, v and w) is obtained from the voltage value $V^*$ as following Equation (13).

$$Vu^* = V^* \cdot \sin(\theta m + \beta T)$$

$$Vv^* = V^* \cdot \sin(\theta m + \beta T - 120°)$$

$$Vw^* = V^* \cdot \sin(\theta m + \beta T - 240°) \qquad \cdots (13)$$

Furthermore, in order for the inverter 2 to output the obtained voltage $Vs^*$ (s : phases u, v and w) to be applied to each of the phases, the PWM signal is corrected by the duty correcting portion 19 and outputted as the drive signal (DRV) through the base driver 10 to be applied to each of the switching elements 12u, 12v, 12w, 13u, 13v and 13w. In specific, the duty correcting portion 19 corrects a duty of the PWM signal generated by the PWM signal generating portion, during the detection of the inverter busbar current by the current detector 11. Then, each of the switching elements 12u, 12v, 12w, 13u, 13v and 13w are electrically driven by the drive signal (DRV) to generate a sinusoidal alternate current to be applied to each of the phases, thus driving the brushless motor.

According to the present embodiment, the estimated angle $\theta m$ is provided using the deviation $\varepsilon$ between the estimated induced voltage value es and the induced voltage reference value esm in the rotor position/speed estimating portion 18, and the sinusoidal driving of the brushless motor 3 is thus implemented by flowing the sinusoidal phase currents.

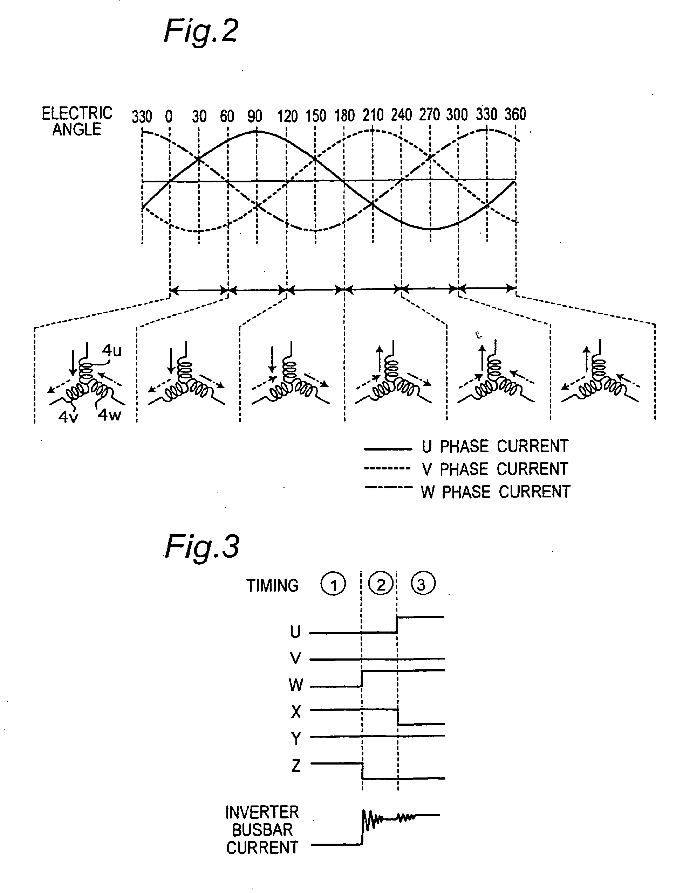

Here, the phase current of the brushless motor 3 appearing in the current flowing on the inverter busbar is described with reference to Figs. 2 through 6. Fig. 2 illustrates a condition of the phase current flowing in each phase winding of the brushless motor 3 every section of electrical angles. In the section of the electrical angles 0 to 60°, it is shown that the phase currents flow from the non-connection ends to the neutral point in the U-phase winding 4u and the W-phase winding 4w and from the neutral point to the non-connection end in the V-phase winding 4v.

In the section of the electrical angles 60 to 120°, it is shown that the currents flow from the non-connection end to the neutral point in the U-phase winding 4u and from the neutral point to the non-connection ends in the V-phase winding 4v and the W-phase winding 4w. Thus, it is shown that conditions of the phase currents flowing through the phase windings are varied every electrical angles 60°.

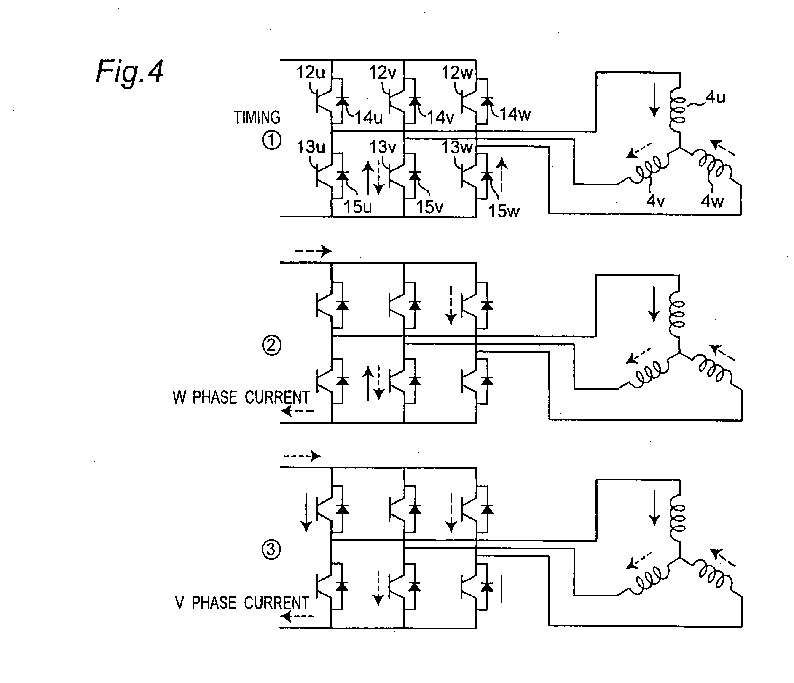

For example, when the PWM signals generated by the PWM signal generating portion 9 at the electrical angle 30° in Fig. 2 vary as shown in Fig. 3 (U, V, W, X, Y and Z are signals for driving the switching elements 12u, 12v, 12w, 13u, 13v and 13w, respectively which are described by an active Hi), there appears no current flow (zero) at a timing (1), there appears a current flowing through the W-phase winding 4w at a timing (2) and there appears a current flowing through the V-phase winding 4v at a timing (3) on the inverter busbar as shown in Fig. 4.

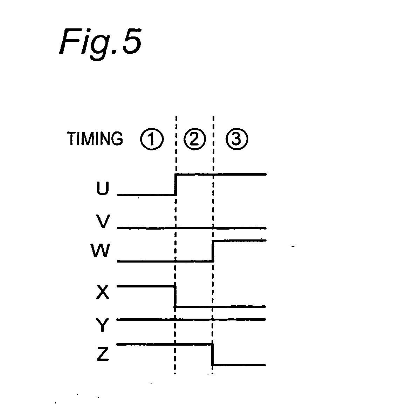

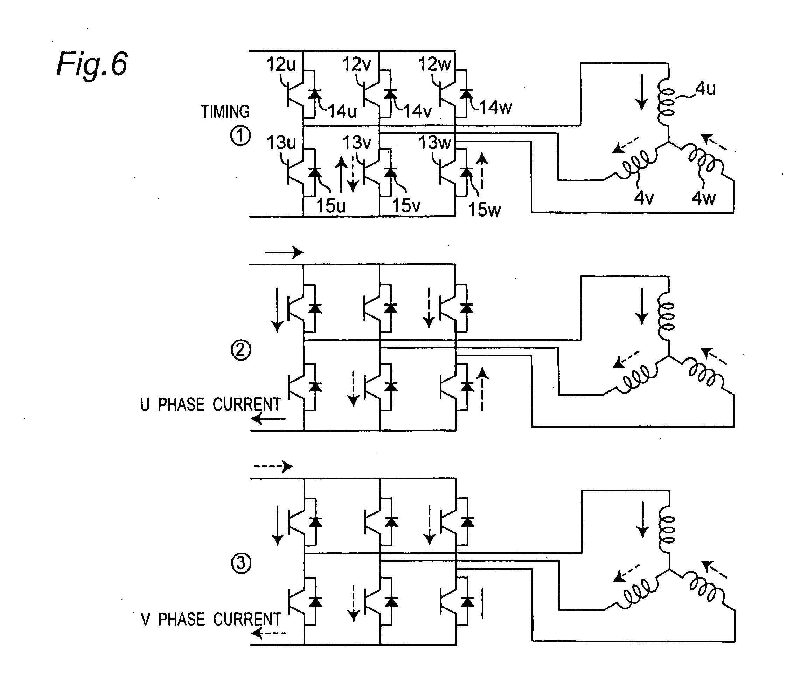

Furthermore, when the PWM signals generated by the PWM signal generating portion 9 are varied at the electrical angle 30° in Fig. 2 as shown in Fig. 5, there appears no current flow (zero) at the timing (1), there appears a current flowing through the U-phase winding 4u at the timing (2) and there appears a current flowing through the V-phase winding 4v at the timing (3) on the inverter busbar as shown in Fig. 6.

Thus, it can be seen that the phase currents appear on the inverter busbar according to the conditions of the switching elements 12u, 12v, 12w, 13u, 13v and 13w in the inverter 2.

When the currents for the two phases are provided at the adjacent timings as described above, it is obvious that the currents of the respective three phases are obtained by a relation of following Equation (14):

$$iu + iv + iw = 0 \qquad\qquad \cdots (14)$$

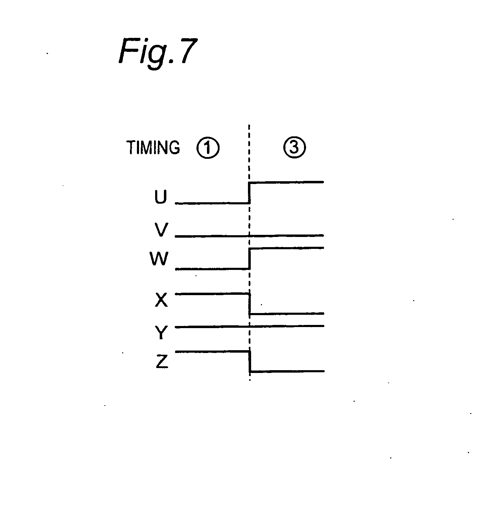

However, when the PWM signals generated by the PWM signal generating portion 9 are varied at the electrical angle 30° in Fig. 2 as shown in Fig. 7, there appears no current flow (zero) at the timing (1) and there appears only a current flowing through the V-phase winding 4v at the timing (3) on the inverter busbar. When the PWM signals of such variations are repeated, the currents in the respective three phases are not provided and the induced voltage estimating portion 17 cannot estimate the induced voltage and the brushless motor 3 cannot be driven.

In order to prevent the above problem, in the duty correcting portion 19, when it becomes necessary to detect a phase current flowing each of the phase windings in the brushless motor 3, the PWM signals generated by the PWM signal generating portion 9 are checked. In the event that the signal variation is as shown in Fig 7, the generated PWM signals are corrected to those as shown in Fig. 3, for example.

Furthermore, when the inverter busbar current is shown as an example in Fig. 3, oscillation in the current is generated at the time of switching. In addition, a noise or the like is superposed in the current detector 11. In order to eliminate such influences, the PWM signal generating portion 9 has a low-pass filter or the like (not shown).

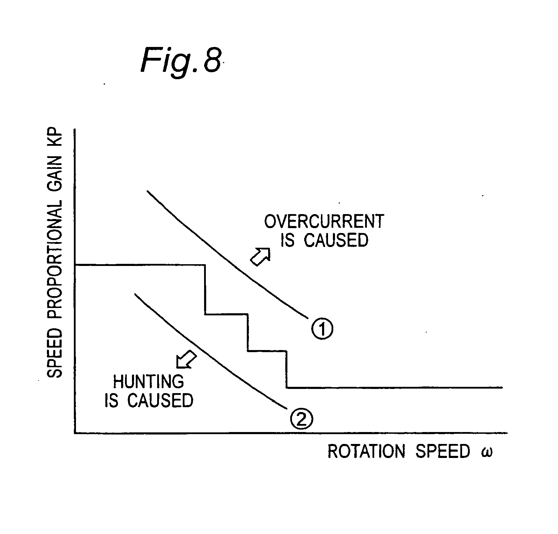

Although a speed proportional gain (KP) of the speed PI calculating portion 21 may be variable in a linear manner according to a speed in a low-speed region of the electric motor, the stability and responsibility is deteriorated a little when a pulse width is small (at the time of a low speed) because of the above correction and the low-pass filter. Therefore, in a preferred embodiment, the speed PI calculating portion 21 may be adapted to set the values of the speed proportional gain KP in a multi-step manner according to a rotation speed ω as shown in Fig. 8. Thus, an appropriate speed proportional gain KP according to a load can be set to thereby prevent a hunting or an overcurrent from being generated.

When the speed proportional gain KP is increased more than the line (1) in Fig. 8, the control is too sensitive and the overcurrent flows in each of the switching elements in the inverter 2. When the speed proportional gain KP is decreased to be less than the line (2), responsibility is lowered because of shortage of the gain and a hunting may be generated. However, those problems can be prevented by the detailed setting in the multi-step manner.

Furthermore, in a preferred embodiment, the speed PI calculating portion 21 may include a memory 21a such as EEPROM or the like in which the speed proportional gain KP values can be stored in a readable and writable manner to and from the outside of the controller 6. Thus, the values according to a difference of loads caused by a capacity difference or the like of a compressor or the like using a three-phase electric motor are stored in the memory 21a to correspond to each load, whereby an electronic control unit can be shared without changing a ROM of a microcomputer.

In addition, duty information of the PWM signals output from the duty correcting portion 19 is applied to the current detector 11. While the current detector 11 detects the inverter busbar current, the current detector 11 determines which phase current of the three phases in the brushless motor 3 is appearing on the inverter busbar.

Thus, the current detector 11 determines the respective currents flowing through the three phases based on the inverter busbar current with reference to the duty information. The resultant current values of the three phases are used in the estimate calculation of the induced voltage in the following induced voltage estimating portion 17.

As described above, by providing the current detector 11 which detects the inverter busbar current and the duty correcting portion 19, the phase current flowing each of the phase windings in the brushless motor 3 can be detected. In addition, the values of the speed proportional gain KP are set in a multi-step manner according to a rotation speed by means of the speed PI calculating portion 21, the stability at a low speed region can be improved.

As described above, according to the electric motor driver of the present invention, there can be obtained an effect that a sinusoidal wave drive can be stably implemented at a low through high speed range in an inexpensive system construction without providing two or more current detectors on a wiring between the inverter and the electric motor.

Furthermore, since the speed proportional gain for the speed PI control is stored in a readable and writable memory, various loads (differences of the three-phase electric motor or a product to be used) can be corresponded by merely varying the data of the memory, whereby a microcomputer and an electronic controller can be shared.

**Claims**

1. An electric motor driver for driving a three-phase electric motor (3) under controlling a drive based on each phase current flowing through each phase winding of the three-phase electric motor, comprising:

   an inverter (2) for converting a DC voltage to a three-phase AC voltage to drive the three-phase electric motor;
   a current detecting means (11) for detecting a current appearing on an inverter busbar to determine each phase current flowing through each phase winding of the three-phase electric motor;
   an induced voltage estimating means (17) for estimating an induced voltage (es) of said electric motor from the voltage value output of said inverter (2) and the phase current value determined by said current detecting means (11);
   a rotation position/speed detecting means (18) for estimating a rotation position ($\theta$m) and a rotation speed (wm) of a rotor of said electric motor based on a deviation ($\varepsilon$) between an induced voltage reference value (esm) and the estimated induced voltage value (es);
   position PI calculating means (20) for calculating a first correction value (CRA) of a rotation position through a proportional-plus-integral (PI) calculation based on the estimated rotation position ($\theta$m) of the rotor so as to make the deviation ($\varepsilon$) 0 ;
   speed PI calculating means (21) for calculating a second correction value (CRS) of a rotation speed through a proportional-plus-integral (PI) calculation based on the estimated rotation speed (wm) of the rotor with application of a target speed ($\omega$*);
   a PWM signal generating means (9) for generating a PWM signal for controlling said inverter based on the first and second correction values obtained by said position PI calculating means (20) and said speed PI calculating means (21); and
   a duty correcting means (19) for checking waveform patterns of the PWM signals generated by said PWM signal generating means and correcting a duty of each of the PWM signals,
   **characterized in that**
   said duty correcting means is configured to correct the duty and to vary the waveform of each of the PWM signals during detection of the inverter busbar current by said current detecting means, in the case where the waveform patterns of the PWM signals generated by said PWM signal generating means (9) are being so varied in repetition that the currents in the respective three phases can not be obtained, in order to prevent undetectability of each phase current flowing through each of the three phase windings.

2. The electric motor driver device according to claim 1,
   wherein a speed proportional gain (KP) of said speed PI calculating means (21) is variable in a multistep manner according to a speed in a low-speed region of said electric motor.

3. The electric motor driver device according to claim 1,
   wherein said speed PI calculating means (21) includes a memory 21 a for readably and writably storing the speed proportional gain (KP) for speed PI control.

4. A drive control system including: the electric motor driver according to claim 1, a DC voltage source (1) for generating a DC voltage and a three phase electric motor (3).

**Patentansprüche**

1. Elektromotortreiber zum Antreiben eines Dreiphasen-Elektromotors (3) unter Steuerung/Regelung eines Antriebs auf der Grundlage jedes Phasenstroms, der durch jede Phasenwicklung des Dreiphasen-Elektromotors fließt, enthaltend:

   einen Umrichter (2) zum Konvertieren einer Gleichspannung in eine Dreiphasen-Wechselspannung, um den Dreiphasen-Elektromotor anzutreiben;

ein Stromerfassungsmittel (11) zum Erfassen eines Stroms, der auf einer Umrichter-Busschiene erscheint, um jeden Phasenstrom zu bestimmen, der durch jede Phasenwicklung des Dreiphasen-Elektromotors fließt;

ein Induktionsspannungsschätzmittel (17) zum Schätzen einer induzierten Spannung (es) des Elektromotors anhand des Spannungswertausgangs des Umrichters (2) und des Phasenstromwerts, der durch das Stromerfassungsmittel (11) bestimmt wird;

ein Drehposition/Drehzahl-Erfassungsmittel (18) zum Schätzen einer Drehposition ($\theta$m) und einer Drehzahl ($\omega$m) eines Rotors des Elektromotors auf der Grundlage einer Abweichung ($\varepsilon$) zwischen einem Induktionsspannungsreferenzwerts (esm) und dem geschätzten Induktionsspannungswert (es);

Position-PI-Berechnungsmittel (20) zum Berechnen eines ersten Korrekturwerts (CRA) einer Drehposition durch eine Proportional-plus-Integral-(PI)-Berechnung auf der Grundlage der geschätzten Drehposition ($\theta$m) des Rotors, um somit die Abweichung ($\varepsilon$) gleich 0 zu machen;

Drehzahl-PI-Berechnungsmittel (21) zum Berechnen eines zweiten Korrekturwerts (CRS) einer Drehzahl durch eine Proportional-plus-Integral-(PI)-Berechnung auf der Grundlage der geschätzten Drehzahl ($\omega$m) des Rotors mit Anwendung einer Solldrehzahl ($\omega$*);

ein PWM-Signal-Erzeugungsmittel (9) zum Erzeugen eines PWM-Signals zum Steuern/Regeln des Umrichters auf der Grundlage der ersten und zweiten Korrekturwerte, die von dem Positions-(PI)-Berechnungsmittel (20) und dem Drehzahl-(PI)-Berechnungsmittel (21) erhalten werden; und

ein Tastverhältniskorrekturmittel (19) zum Prüfen der Signalformmuster der PWM-Signale, die von dem PWM-Erzeugungsmittel erzeugt worden sind, und zum Korrigieren eines Tastverhältnisses jedes der PWM-Signale, **dadurch gekennzeichnet, dass**

das Tastverhältniskorrekturmittel dafür konfiguriert ist, das Tastverhältnis zu korrigieren und die Signalform jedes der PWM-Signale zu variieren, während der Erfassung des Umrichter-Busschienenstroms durch das Stromerfassungsmittel, in dem Fall, in dem die Signalformmuster der von dem PWM-Signal-Erzeugungsmittel (9) erzeugten PWM-Signale wiederholt so variiert werden, dass die Ströme in den jeweiligen drei Phasen nicht erreicht werden können, um eine Nicht-Erfassbarkeit jedes Phasenstroms, der durch jede der drei Phasenwicklungen fließt, zu verhindern.

2.  Elektromotortreibervorrichtung nach Anspruch 1,
    wobei eine drehzahlproportionale Verstärkung (KP) des Drehzahl-(PI)-Berechnungsmittels (21) in mehreren Schritten entsprechend einer Drehzahl in einem Niedrigdrehzahlbereich des Elektromotors veränderlich ist.

3.  Elektromotortreibervorrichtung nach Anspruch 1,
    wobei das Drehzahl-(PI)-Berechnungsmittel (21) einen Speicher (21 a) enthält zum lesbaren und schreibbaren Speichern der drehzahlproportionalen Verstärkung (KP) für die Drehzahl-(PI)-Steuerung/Regelung.

4.  Antriebs-Steuerungs/Regelungs-System, enthaltend:

    den Elektromotortreiber nach Anspruch 1, eine Gleichspannungsquelle (1) zum Erzeugen einer Gleichspannung und einen Dreiphasen-Elektromotor (3).

## Revendications

1.  Entraîneur pour un moteur électrique permettant d'entraîner un moteur électrique triphasé (3) sous la commande d'un entraînement sur la base de chaque courant de phase circulant à travers chaque enroulement de phase du moteur électrique triphasé, comprenant :

    un onduleur (2) permettant de convertir une tension continue en une tension alternative triphasée pour entraîner le moteur électrique triphasé ;

    un moyen (11) de détection de courant permettant de détecter un courant apparaissant sur une barre omnibus de l'onduleur pour déterminer chaque courant de phase circulant à travers chaque enroulement de phase du moteur électrique triphasé ;

    une moyen (17) d'estimation de tension induite permettant d'estimer une/des tension(s) induite(s) dudit moteur électrique à partir de la sortie de valeur de tension dudit onduleur (2) et la valeur de courant de phase déterminée par ledit moyen de détection (11) ;

    un moyen (18) de détection de position/vitesse de rotation permettant d'estimer une position de rotation ($\theta$m) et une vitesse de rotation ($\omega$m) d'un rotor dudit moteur électrique sur la base d'un écart ($\varepsilon$) entre une valeur de référence de tension induite (esm) et la valeur de tension induite estimée (es) ;

un moyen (20) de calcul proportionnel par intégration et par dérivation PI de position permettant de calculer une première valeur de correction (CRA) d'une position de rotation à travers un calcul proportionnel par intégration et par dérivation (PI) sur la base de la position de rotation estimée ($\omega$m) du rotor de manière à ce que l'écart ($\varepsilon$) soit égal à 0 ;

un moyen (21) de calcul proportionnel par intégration et par dérivation PI de vitesse pour calculer une deuxième valeur de correction (CRS) d'une vitesse de rotation à travers un calcul proportionnel par intégration et par dérivation (PI) sur la base de la vitesse de rotation estimée ($\omega$m) du rotor avec l'application d'une vitesse cible ($\omega$*) ;

un moyen (9) de génération de signaux de modulation d'impulsion en durée (PWM) permettant de générer un signal PWM afin de commander ledit onduleur sur la base des première et deuxième valeurs de correction obtenues par ledit moyen (20) de calcul proportionnel par intégration et par dérivation PI de position et ledit moyen (21) de calcul proportionnel par intégration et par dérivation PI de vitesse ; et

un moyen (19) de correction de charge permettant de vérifier des modèles de formes d'onde des signaux PWM générés par ledit moyen de génération de signaux PWM et de corriger une charge de chacun des signaux PWM, ledit moyen (19) de correction de charge est configuré pour corriger la charge et pour faire varier les formes d'onde de chacun des signaux PWM durant la détection du courant de la barre omnibus de l'onduleur par ledit moyen de détection de courant, dans le cas où les modèles de forme d'onde des signaux PWM générés par ledit moyen (9) de génération de signaux PWM sont variés en répétition de sorte que les courants dans les trois phases respectives ne puissent pas être obtenus, afin d'empêcher l'indétectabilité de chaque courant de phase circulant à travers chacun des enroulements triphasés.

2. Dispositif d'entraînement de moteur électrique selon la revendication 1,
dans lequel un gain proportionnel de vitesse (KP) dudit moyen (21) de calcul proportionnel par intégration et par dérivation de vitesse PI est variable selon des étapes multiples en fonction d'une vitesse dans une région à faible vitesse dudit moteur électrique.

3. Dispositif d'entraînement de moteur électrique selon la revendication 1,
dans lequel ledit moyen (21) de calcul proportionnel par intégration et par dérivation PI de vitesse comporte une mémoire 21a pour stocker de manière écrite et lisible le gain proportionnel de vitesse (KP) pour la commande proportionnelle par intégration et par dérivation PI de vitesse.

4. Système de commande d'entraînement comportant :

l'entraîneur de moteur électrique selon la revendication 1, une source de tension continue (1) pour générer une tension continue et un moteur électrique triphasé (3).

Fig.1

## Fig.2

—— U PHASE CURRENT
------- V PHASE CURRENT
----- W PHASE CURRENT

## Fig.3

Fig.4

# *Fig.5*

Fig.6

# Fig.7

# Fig.8

Fig.9

EP 1 406 375 B1

**EP 1 406 375 B1**

**REFERENCES CITED IN THE DESCRIPTION**

**Patent documents cited in the description**

- US 5457375 A
- US 5920175 A
- JP 2000350489 A